(19) Europäisches Patentamt
European Patent Office
Office européen des brevets

(11) **EP 2 169 482 A2**

(12) **EUROPÄISCHE PATENTANMELDUNG**

(43) Veröffentlichungstag:
**31.03.2010 Patentblatt 2010/13**

(51) Int Cl.:
***G05B 11/00*** *(2006.01)*

(21) Anmeldenummer: **09011542.9**

(22) Anmeldetag: **09.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **19.09.2008 DE 102008048001**

(71) Anmelder: **Robert Bosch GmbH**
**70469 Stuttgart (DE)**

(72) Erfinder:
• **Komsta, Jan**
 **97846 Partenstein (DE)**
• **Antoszkiewicz, Peter**
 **97828 Marktheidenfel (DE)**
• **Heeg, Thoms**
 **63739 Aschaffenburg (DE)**

(74) Vertreter: **Thürer, Andreas**
**Bosch Rexorth AG**
**Zum Eisengießer 1**
**97816 Lohr am Main (DE)**

(54) **Vorrichtung und Verfahren zum Regeln eines hydraulischen Antriebs mit einem Sliding-Mode-Regler**

(57)    Erfindungsgemäß wird ein Verfahren zum Regeln eines hydraulischen Antriebs bereitgestellt, wobei der Antrieb einen Zylinder (14) und ein den Zylinder (14) schaltendes Ventil (17) aufweist. Eine elektrische Spannung (u(t)) von dem Ventil empfangen und in eine Position des Zylinders (14) umgesetzt. Die Position wird durch Ansteuern der elektrischen Spannung mit einer Sliding-Mode Regelung geregelt. Das Stellgesetz der Regelung enthält ein äquivalentes Stellgesetz und ein diskontinuierliches Stellgesetz. Das diskontinuierliche Stellgesetz mit folgenden Schritten erzeugt. Es wird eine Schaltfunktion s(e,t) mittels der gewichteten Summe

$$s(e,t) = -\lambda_1 e - \lambda_2 \dot{e} - \lambda_3 \ddot{e}$$

berechnet, wobei für e gilt: $e = x_r - x$. $x_r$ ist dabei die Zielposition des Zylinders. $\lambda_1$, $\lambda_2$, $\lambda_3$ sind Konstanten, die alle >0 sind. Das Verfahren enthält zusätzlich einen Schritt des Bildens einer Vorzeichenfunktion, wobei das Argument der Vorzeichenfuktion die Schaltfunktion s(e, t) enthält.

FIG. 2

EP 2 169 482 A2

**Beschreibung**

Die Erfindung betrifft ein Verfahren zum Regeln eines hydraulischen Antriebs und eine Regelungsschaltung für einen hydraulischen Antrieb. Zur Regelung der Bewegung eines hydraulischen Antriebs werden üblicherweise Ventile verwendet, die beispielsweise elektrisch angesteuert werden. Klassischerweise werden solche Antriebe mit Hilfe einer linearen Regelung durchgeführt, bei der nicht nicht-lineare Effekte durch lineare Funktionen annährend nachgebildet werden. Speziell bei Stranggießanlagen hat sich eine solche Regelung als schwierig erwiesen, da es bei einer solchen einerseits häufig zu Geschwindigkeits- und Richtungswechseln der Zylinderbewegungen kommt. Andererseits verändert dabei eine hupabhängige Massenänderung der Last auf, so dass sich die Parameter der Regelstrecke über der Zeit stark ändert.

Die US 7,231,265 B2 schlägt vor, einen Sliding-Mode Regelung zur Regelung eines hydraulischen Antrieb zu verwenden. Sliding-Mode Regelungen gehören zu den strukturvariablen Regelungen. Ein Sliding-Modd Regler kann ein nicht-lineares System dazu bringen, sich wie ein lineares System zu verhalten, wenn der Zustand des Systems einen so genannten Gleitzustand erreicht hat. Gemäß einer Entwurfsmethode für ein SlidingMode Regelung werden zunächst die Gleitfläche (Schaltfläche) im Zustandsraum bestimmt. Anschließend wird ein Stellgesetz entwickelt, das sich aus einem kontinuierliches, auch äquivalentes genannt, Stellgesetz und einem diskontinuierlichen Stellgesetz zusammensetzt. Das kontinuierliche Stellgesetz soll dafür sorgen, dass eine Zustandstrajektorie auf einer Schaltfläche s=0 verbleibt. Das diskontinuierliche Stellgesetz hat dagegen die Aufgabe, die Zustandstrajektorie in Richtung der Schaltfläche zu bewegen und das Auftreten eines stabilen Gleitzustands sicherzustellen und auch alle unmodellierten Effekte wie Parameterschwankungen und Reibung zu kompensieren.

Da es sich als schwierig erwiesen hat, die Parameter dieser Stellgesetze so auszuwählen, dass die Regelung auch hinreichend stabil ist, haben sich in der industriellen Praxis die Sliding-Mode Regelungen noch nicht durchgesetzt.

Es ist Aufgabe der Erfindung, ein Verfahren zur Regelung eines hydraulischen Antrieb so bereitzustellen, dass eine stabile Regelung auch bei Änderungen der der Masse der angetriebenen Last und anderer Parameter, zum Beispiel der Reibung, erfolgt.

Diese Aufgabe wird durch den Gegenstand des unabhängigen Patentanspruchs gelöst. Vorteilhafte Ausgestaltungen ergeben sich aus den Unteransprüchen.

Erfindungsgemäß wird ein Verfahren zum Regeln eines hydraulischen Antriebs bereitgestellt, wobei der Antrieb einen Zylinder und ein den Zylinder schaltendes Ventil aufweist. Eine elektrische Spannung wird von dem Ventil empfangen und in eine Position des Zylinders umgesetzt. Die Position wird durch Ansteuern der elektrischen Spannung mit einer sliding-Mode Regelung geregelt. Das Stellgesetz der Regelung enthält ein äquivalentes Stellgesetz und ein diskontinuierliches Stellgesetz. Das äquivalente Stellgesetz wird gleich Null gesetzt und das diskontinuierliche Stellgesetz mit folgenden Schritten erzeugt. Es wird eine Schaltfunktion s(e,t) mittels der gewichteten Summe

$$s(e,t) = -\lambda_1 e - \lambda_2 \dot{e} - \lambda_3 \ddot{e}$$

berechnet, wobei für e gilt: $e = x_r - x$. $x_r$ ist dabei die Zielposition des Zylinders. $\lambda_1$, $\lambda_2$, $\lambda_3$ sind Konstanten, die alle >0 sind.

Es versteht sich, dass die Berechnung auch durch Umformung zu $s(\tilde{e},t) = \lambda_1 \tilde{e} + \lambda_2 \dot{\tilde{e}} + \lambda_3 \ddot{\tilde{e}}$ mit $\tilde{e} = x - x_r$ erfolgen kann. Ein Punkt über einer Variabel kennzeichnet eine Ableitung nach der Zeit.

Das Verfahren enthält zusätzlich einen Schritt des Bildens einer Vorzeichenfunktion, wobei das Argument der Vorzeichenfunktion die Schaltfuriktion s(e,t) enthält.

Das Vernachlässigen des Äquivalenzstellgesetzes ermöglicht, den Reglerentwurf allein auf der Basis des diskontinuierlichen Stellgesetzes vorzunehmen. Somit vereinfacht sich das Verfahren erheblich. Die Regelung ist zugleich robuster gegenüber herkömmlichen Verfahren. Dadurch kann der Regler mit einer einfacheren Struktur aufgebaut werden und kann somit für industrielle Anwendungen entworfen und implementiert werden.

In einer Ausführungsform wird die diskontinuierliche Schaltfunktion als gewichtete Summe

$$s(\tilde{e},t) = \lambda_1 \tilde{e} + \lambda_2 \dot{x} + \ddot{x}$$

, beziehungsweise mit $e = x_r - x$
als

$$s(e,t) = -\lambda_1 e + \lambda_2 \dot{x} + \ddot{x}$$

berechnet wird. Damit kann der Berechnungsaufwand zusätzlich verringert werden.

In einer Ausführungsform enthält der hydraulische Antrieb ein Stetigventil, das von der Spannung u(t) angesteuert wird.

u (t) wird mittels des Stellgesetzes

$$u(t) = -K * sat\left(\frac{s}{\Phi}\right)$$

berechnet, wobei K und F Konstanten sind, wobei K,F > 0 gilt und die Funktion sat durch

$$sat\left(\frac{s}{\Phi}\right) = \begin{cases} \text{sgn}\left(\frac{s}{\Phi}\right) & |s| > \Phi \\ \frac{s}{\Phi} & |s| \leq \Phi \end{cases}$$

$$\text{sgn}\, x = \begin{cases} 1 & x > 0 \\ 0 & x = 0 \\ -1 & x < 0 \end{cases}$$

definiert sind. sgn ist die Vorzeichenfunktion, die auch als Signumfunktion bezeichnet wird. Die Funktion sat wird verwendet, um das sogenannte Klappern zu vermeinden. Klappern auch Rappeln, auf englisch chattering genannt, bezeichnet kleine Schwankungen um die Schaltflächen herum. Die Ursache für das Klappern ist, dass die Berechnung der Schaltfunktion nicht unendlich schnell ist, sondern mit einer kleinen Verzögerung erfolgt. Auch können reale Stellglieder nicht unendlich schnell reagieren.

Um das Klappern zu vermindern oder zu eliminieren, wird der Parameter F mit Hilfe folgender Schritte ermittelt. Zunächst wird die Position des Zylinders durch Anlegen der Spannung u gemäß der Funktion $u(t)=u_{sw}=u_{aq}-K*\text{sgn}(s)$ angesteuert.

Anschließend werden die Position, die Geschwindigkeit und die Beschleunigung des Zylinders gemessen und daraus von sm(e,t) gemäß $s_m(e,t)=-\lambda_1 e-\lambda_2 \dot{e}-\lambda_3 \ddot{e}$ ermittelt.

Falls sm ein Chattering-Verhalten aufweist, wird die Auslenkung zwischen Minimum und Maximum des Chattering von sm gemessen und F gleich der halben Ampliude des Chattering gesetzt. Erfahrungsgemäß wird bei einem derartigen Einstellen des Parameters F in vielen Fällen das Klappern bereits eliminiet.

Um zu überprüfen, ob das Klappern eliminiert ist, wird ein weiterer Schritt des Testens des gesetzten Parameters F durch Ansteuern des Zylinders mittels des Stellgesetzes

$$u = u_{sw} = u_{eq} - K * sat\left(\frac{s}{\Phi}\right),$$

$$sat\left(\frac{s}{\Phi}\right) = \begin{cases} \operatorname{sgn}(\frac{s}{\Phi}) & |s| > \Phi \\ \dfrac{s}{\Phi} & |s| \le \Phi \end{cases}$$

durchgeführt. Die Position des Zylinders.kann dabei gemessen werden, um festzustellen, ob die Regelung noch klappert.

Anschließend wird vorzugsweise ein anschließender Schritt des Modifizieren des Parameters F durchgeführt, falls beim Schritt des Testens ein Chattering-Verhalten festgestellt wurde.

In einer weiteren Ausführungsform ist das Ventil des hydraulischen Antrieb als Schaltventil ausgebildet ist, das von der Spannung u(t) angesteuert wird, die mittels des diskontinuierlichen Stellgesetzes $u(t)=u_{sw}=-K*\operatorname{sgn}(s)$ berechnet wird. K ist eine Konstante > 0.

Falls K gleich der maximalen Ventilspännung ist, wird dafür gesorgt, dass das Ventil im gesamten Ansteuerbereich angesteuert werden kann.

Die Parameter der Stellfunktion s werden in einer Ausführungsform so gewählt, dass $\lambda_1 = \omega_0^2$ und $\lambda_2 = 2\xi\omega_0$ gilt, wobei $\omega_0$ gleich der Eigenfrequenz des Zylinders und $\xi$ gleich der gewünschte Zylinderdämpfunggrad sind. Diese Einstellung der Parameter $\lambda_1$ und $\lambda_2$ hat sich als Startpunkt für eine schnelle und robuste Regelung bewährt.

Die Erfindung betrifft auch eine Regelvorrichtung zum Regeln eines hydraulischen Antriebs, wobei der Antrieb einen Zylinder und ein den Zylinder schaltendes Ventil aufweist, wobei eine elektrische Spannung von dem Ventil empfangen und in eine Position des Zylinder umgesetzt wird. Es ist eine Regelschaltung vorgesehen zum Regeln der Position durch Ansteuern der elektrischen Spannung mit einer Sliding-Mode Regelung.
Das Stellgesetz der Regelung enthält ein äquivalentes Stellgesetz und ein diskontinuierliches Stellgesetz, bei dem das diskontinuierliche Stellgesetz folgendermaßen gebildet wird. Ein Addierer ist zum Berechnen einer Schaltfunktion s(e, t) als gewichtete Summe $s(e,t)=-\lambda_1 e-\lambda_2 \dot{e}-\lambda_3 \ddot{e}$, vorgesehen, wobei für e gilt: $e=x_r-x$.

$x_r$ ist die Zielposition des Zylinders, und $\lambda_1, \lambda_2, \lambda_3$ sind Konstanten, für die gilt: $\lambda_1, \lambda_2, \lambda_3 > 0$. Ein Funktionsblock ist zum Bilden einer Vorzeichenfunktion vorgesehen, wobei der Funktionsblock einen Eingang zum Empfang des Arguments der Vorzeichenfunktion enthält und der Eingang mit einem Ausgang des Addierers gekoppelt ist.

In einer Ausführungsform wird das äquivalente Stellgesetz gleich Null gesetzt wird.

In einer Ausführungsform ist eine Totzone zwischen dem Ausgang des Addierers und dem Eingang des Funktionsblocks vorgesehen, womit bei Schaltventilen das Schalten nach Errriechen einer definierten Genauigkeit unterbrochen wird.

Die Erfindung betrifft auch eine Baugruppe aus einer erfindungsgemäßen Regelvorrichtung des von der Regelvorrichtung geregelten hydraulischen Antriebs.

Ferner betrifft die Erfindung auch eine Stranggießanlage mit einer solchen erfindungsgemäßen Baugruppe.

Die Erfindung ist in den Zeichnungen anhand eines Ausführungsbeispiels näher veranschaulicht.

Figur 1        zeigt eine Regelungsschaltung für einen hydraulischen Antrieb gemäß einer ersten Ausführungsform.

Figur 2        zeigt den hydraulischen Antrieb aus Figur 1 im Detail.

Figur 3        veranschaulicht eine Schaltgerade im Zustandsraum unter Verwendung der sat-Funktion (Regelungsschaltung nach Figur 1).

Figur 4        zeigt eine Regelungsschaltung für einen hydraulischen Antrieb gemäß einer zweiten Ausführungsform.

Figur 5        zeigt eine Regelungsschaltung für einen hydraulischen Antrieb gemäß einer dritten Ausführungsform.

Figur 6        zeigt eine Schaltgerade, die in der Regelungsschaltung nach Figur 5 verwendet wird.

Figur 7        zeigt die Geschwindigkeitsregelung für einen Zugzylinder in einer Stranggießanlage mit einer erfindungsgemäßen Regelung

Figur 8        zeigt die Geschwindigkeitsregelung für einen Zugzylinder mit einer herkömmlichen Regelung.

Figur 9        den Verlauf einer Zylinderposition beim Bestimmen der Parameter für die Regelung.

Figur 10       den Verlauf die zu Figur 9 zugehörige Schaltfunktion.

Figur 11       zeigt einen Ausschnitt aus Figur 10.

Figur 12       zeigt die Zylinderposition beim Regeln mit einer Sliding-Mode-Regelung.

Figur 13       zeigt eine Reglerstruktur, die zum Ermitteln der Parameter verwendet wird.

Figur 14       zeigt die Zylinderposition während des Umschaltens in der Reglerstruktur nach Figur 13.

Figur 15       zeigt eine Anlage, an der eine erfindungsgemäße Regelung getestet wurde.

Figuren 16     bis 21 Messergebnisse beim Test der Anlage gemäß Figur 15.

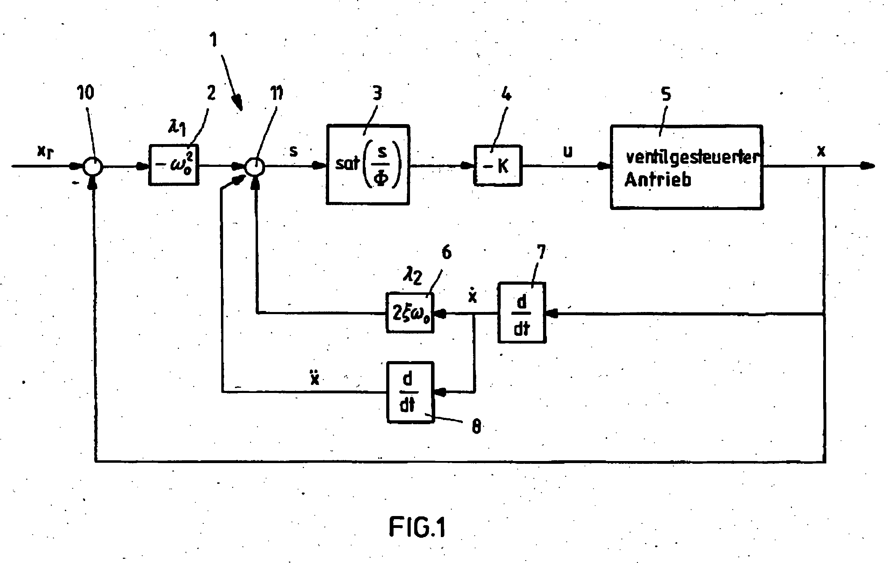

Figur 1 zeigt eine Regelungsschaltung 1 für einen hydraulischen Antrieb 5 gemäß einer ersten Ausführungsform. Der hydraulische Antrieb 5 weist ein Ventil und einen von diesem Ventil gesteuerten Zylinder auf. Die Regelungsschaltung 1 weist einen ersten Vergleicher 10, einen ersten Multiplizierer 2, einen ersten Addierer 11, ein erstes Funktionsglied 3, einen zweiten Multiplizierer 4, einen ersten Differenzierer 7, einen zweiten Differenzierer 8 und einen dritten Multiplizierer 6 auf.

Die Regelungsschaltung 1 empfängt als Eingangssignal ein Signal $x_r$, das die Zielposition des Zylinders anzeigt.

Das Eingangssignal $x_r$ wird auf einen ersten Eingang des ersten Vergleichers 10 geschaltet, der an seinem zweiten Eingang das Signal x, das die aktuelle Position des Zylinders angibt, empfängt. Das Ausgangssignal des ersten Vergleichers 10 wird von dem ersten Multiplizierer 2 empfangen, der dieses mit dem Wert $\lambda_1$ multipliziert. Das Signal x wird auch zu dem Eingang des ersten Differenzierers 7 geführt, der das Signal x ableitet und daraus das Signal x erzeugt. Dieses Signal wird zum einen zu dem Eingang des zweiten Differenzierers 8 gegeben, der somit das Signal x ausgibt. Zum anderen wird das Signal x in dem dritten Multiplizierer 6 mit dem Wert $\lambda_2$ multipliziert.

Die Ausgangssignal des ersten Multiplizierers 2, des dritten Multiplizierers 6 und des zweiten Differenzierers 8 werden zu den Eingängen des Addierers 11 geführt, der diese Eingangssignale addiert und als die Summe das Signal s ausgibt. Die durch das Signal s gebildete Funktion wird auch als Schaltfunktion bezeichnet. Das erste Funktionsglied 3 teilt das Signal s durch eine Konstante F und verwendet das Ergebnis dieser Division als Argument für eine sat-Funktion. Die satFunktion ist definiert als:
die Vorzeichenfunktion mit

$$\operatorname{sgn} x = \begin{cases} 1 & x > 0 \\ 0 & x = 0 \\ -1 & x < 0 \end{cases}$$

ist.

Das Funktionsergebnis der sat-Funkion, das der Funktionsblock 3 an seinem Ausgang ausgibt, wird in dem zweiten Multiplizierer mit dem Wert - K multipliziert, wobei K eine Konstante > 0 ist, und das Ergebnis dieser Multiplikation wird als elektrische Spannung u an das Ventil des Antriebs 5 ausgegeben. Der Ventil-gesteuerte Antrieb 5 enthält ein Stetigventil sowie einen Zylinder. Der Zylinder enthält einen Kolben, dessen Position als Abstand gemessen und als Signal x ausgegeben wird.

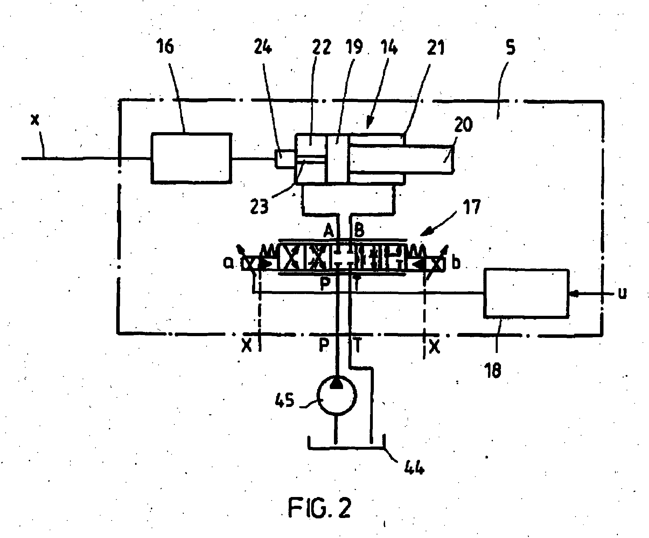

Figur 2 zeigt Details des elektrischen Antriebs 5 aus Figur 1. Die Antriebseinheit 5 enthält einen Differenzialzylinder 14 mit angebautem Wegesensor 24, eine Sensorelektronik 16, ein Regelventil 17 und eine Elektronik 18. Der Differenzialzylinder 14 weist einen Kolben 19 auf, der den Zylinderraum
des Differenzialzylinders 14 in einen kolbenstangenseitigen Druckraum 21 und in einen kolbenseitigen Druckraum 22 unterteilt. Der Weggeber 24 nimmt mit Hilfe des Messrohres 23 die Position des Kolbens auf, die von der Sensorelektronik 16 in das elektrische Signal x umgewandelt wird.
Das Regelventil 17 wird von der Elektronik 18 angesteuert.
Das Regelventil 17 weist einen Druckanschluss P, der von einer Pumpe 42 angesteuert wird, und einen Tankanschluss T, der mit dem Tank 44 verbunden ist, sowie zwei Ausgänge A und B auf. Der Ausgang A ist mit dem Druckraum 22 und der Ausgang B mit dem Druckraum 21 verbunden. Der Differenzialzylinder 14 wird für eine Stranggießanlage verwendet. Mit Hilfe der Kolbenstange 20 wird ein Strang gezogen. Während des Gießverfahrens wird oft die Geschwindigkeit der Kolbenbewegung und die Richtung der Kolbenstangenbewegung geändert. Da sich zusätzlich im Laufe des Gießvorgangs die Masse der Last ändert, ist die Regelung mit herkömmlichen Regelungsmechanismen schwierig.

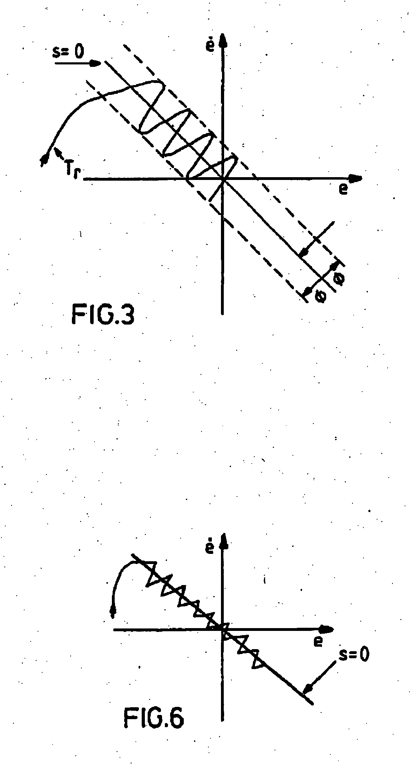

Figur 3 veranschaulicht eine Schaltgerade in der Phasenebene. Die Phasenebene wird durch die Differenzfunktion e und die Ableitung dieser Differenzfunktion e aufgespannt. Die Schaltfunktion s=0 bildet eine Schaltgerade. Von einem beliebigen Punkt der Phasenebene bewegt sich der Zustand des Systems auf einer Trajektorie Tr, die die Schaltgerade in endlicher Zeit erreicht. Die Schwankungen um die Schaltgerade kennzeichnen das Klappern.

Im Folgenden wird eine Herleitung für die in Figur 1 gezeigte Sliding-Mode Regelung für den mit dem Stetigventil 17 gesteuerten hydraulischen Antrieb vorgestellt, welche nur ein diskontinuierliches Stellgesetz anwendet.

Der Reglerentwurf basiert auf einem vereinfachten linearen Modell 3. Ordnung (n=3) für das elektrohydraulische Antriebssystem unter Vernachlässigung der Ventildynamik:

$$G(s) = \frac{x(s)}{u(s)} = \frac{K_V K_Z}{s(\omega_0^{-2} s^2 + 2\xi \omega_0^{-1} s + 1)} . \qquad (1)$$

mit:

| | | | |
|---|---|---|---|
| $x(s)$ | Zylinderposition | $\xi$ | Zylinderdämpfung |
| $u(s)$ | Eingangsspannung Ventil | $Kz$ | Zylinderverstärkung |
| $\omega_0$ | Eigenfrequenz Zylinder | $Kv$ | Ventilverstärkung |

s ist in Gleichung (1) die komplexe Zahl der Laplace-Transformierten und nicht mit der Schaltfunktion s zu verwechseln.

Es wird das Äquivalenzstellgesetz $u_{eq}$ vernachlässigt, mit anderen Worten $u_{eq}=0$, und nur das diskontinuierliche Stellgesetz verwendet. Für n=3 ergibt sich als Schaltfläche nach der Theorie zur Sliding-Mode Regelung:

$$s(\tilde{e},t) = \lambda_1 \tilde{e} + \lambda_2 \dot{\tilde{e}} + \ddot{\tilde{e}} \qquad (2)$$

mit $\tilde{e} = x - x_r$

Unter der vereinfachten Annahme $\dot{x}_r = 0$ und $\ddot{x}_r = 0$ für Positioniervorgänge ergibt sich:

$$s(\tilde{e},t) = \lambda_1 \tilde{e} + \lambda_2 \dot{x} + \ddot{x} \qquad (3)$$

und mit $e = x_r - x$ wird:

$$s(e,t) = -\lambda_1 e + \lambda_2 \dot{x} + \ddot{x} \qquad (4)$$

Unter Verwendung des Lyapunov-Ansatzes

$$\dot{s}(t) = -K \cdot \mathrm{sgn}(s) \qquad (5)$$

wobei sgn die oben definierte Vorzeichenfunktion ist, wird das System auf die Schaltfläche für den Sliding-Mode hingeführt. Damit wird das so genannte "reaching law" erfüllt, sowie asymptotische Stabilität gewährleistet. Durch Ersetzen der Vorzeichenfunktion durch die sat-Funktion (Gl. 6)

$$sat = \begin{cases} \operatorname{sgn}(\frac{s}{\Phi}) & |s| > \Phi \\ \frac{s}{\Phi} & |s| \leq \Phi \end{cases} \qquad (6)$$

resultiert das nun relativ einfach zu implementierende Stellgesetz (Gl. 7) :

$$u = -K * sat(\frac{s}{\Phi}) \qquad (7)$$

mit:

K als der maximalen Ventilspannung, z.B. 10 V

$$s(e,t) = -\lambda_1 e + \lambda_2 \dot{x} + \ddot{x}$$

$$\lambda_1, \lambda_2, \Phi > 0$$

Erwähnenswert ist hierbei, dass bei Eintritt in die Region, in der eine Gleitbewegung stattfindet, der Sliding-Mode Regler zu einem Zustandsregler mit Positions-, Geschwindigkeitsund Beschleunigungsrückführung wird.

Die Parameters $\lambda_1$ und $\lambda_2$ können dann im ersten Ansatz wie folgt bestimmt werden:

$$\lambda_1 = \omega_0^2 \qquad (8)$$

$$\lambda_2 = 2 \xi \omega_0 \qquad (9)$$

Für $\Phi$ gilt: $\Phi > 0$ sein muss. Es gilt generell, dass durch eine Erhöhung von $\Phi$, d.h. durch Erhöhung der Dicke der Grenzschicht, ein eventuell vorhandenes "chattering" beseitigt werden kann.

Dies geht aber nur auf Kosten der Robustheit und einer Vergrößerung der Regelabweichung. Darauf muss beim Wählen des Parameters $\Phi$ geachtet werden. Bei Simulationen hat sich gezeigt, dass die Wahl von $\lambda_1$ wesentlich mehr Einfluss auf die Reglereigenschaften hat als $\lambda_2$. $\lambda_2$ sollte nur nicht zu groß gewählt werden, bzw. kann unter Umständen sogar gleich Null gesetzt ($\lambda_2 = 0$) werden. Dies kann anhand eines Simulationsmodells herausgefunden werden.

Die Gleichungen (8) und (9) stellen einen wichtigen Ansatz zu einer ersten Bestimmung der beiden Parameter dar. Des Weiteren hat die Wahl der Abtastzeit einen wesentlichen Einfluss auf das Regelverhalten und sollte bei dem gewählten Ausführungsbeispiel nicht über 1 ms liegen.

Die Regelungsschaltung aus Figur 1 wurde mit dem Simulationsprogramm Matlab/Simulink unter Verwendung eines nichtlinearen Streckenmodells 6. Ordnung und auch mit einem Simulationsprogramm namens MOSIHS stimuliert.

Die Simulationsergebnisse für eine beispielhaft gewählte Zylinder/Ventilkombination zeigen ein sehr gutes Regelungsverhalten bei Positioniervorgängen sowie bei der Trajektorienverfolgung. Insbesondere ergeben sich kürzere Einschwingzeiten und geringere Schleppabstände. Es ist auch eine höhere Robustheit gegenüber Parameterschwankungen wie Masse und Reibung zu erkennen.

Allerdings muss beachtet werden, dass die Robustheit abnimmt, wenn die sat-Funktion anstelle der sgn-Funktion verwendet wird, um das Chattering zu eliminieren.

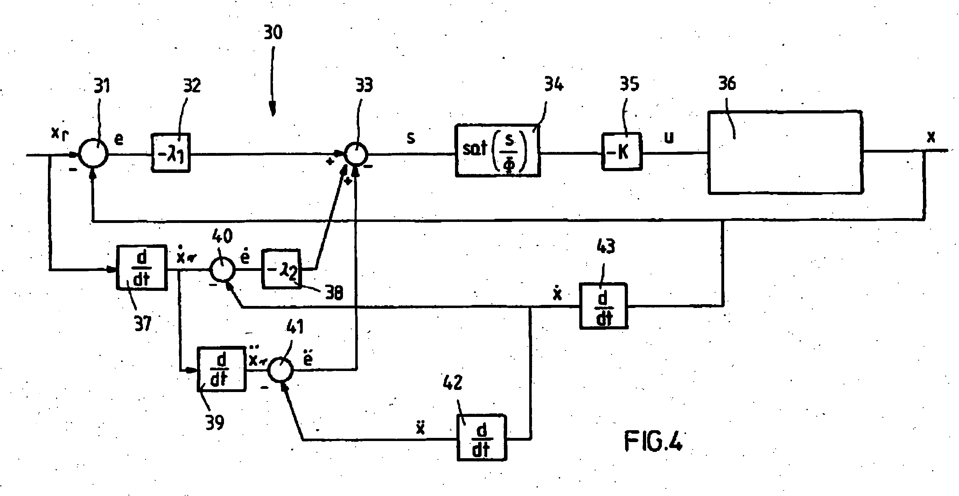

Figur 4 zeigt ein zweites Ausführungsbeispiel der Regelungsschaltung. Dabei ist auf die vereinfachte Annahme

$\dot{x}_r = 0$ und $\ddot{x}_r = 0$ zu verzichten und die ursprüngliche Beziehung $s(\tilde{e},t)=\lambda_1\tilde{e}+\lambda_2\dot{x}+\ddot{x}$ mit $\tilde{e} = x - x_r$ zu verwenden. Dadurch ergibt sich aber keine prinzipielle Änderung am Stellgesetz. Die Regelungsschaltung 30 ist zum Regeln des hydraulischen Antriebs 36 eingerichtet und enthält einen ersten Vergleicher 31, einen ersten Multiplizierer 32, einen Addierer 33, einen ersten Funktionsblock 34, einen zweiten Multiplizierer 35, einen ersten Differenzierer 37, einen zweiten Differenzierer 39, einen dritten Differenzierer 42 und einen vierten Differenzierer 43. Zudem weist die Regelüngsschaltung einen zweiten Vergleicher 40, einen dritten Vergleicher 41 und einen dritten Multiplizierer 38 auf.

Der erste Vergleicher 31 subtrahiert das Signal x von dem Signal $x_r$ zu dem Signal e. Das Signal $x_r$ wird mit dem ersten Differenzierer 37 zu dem Signal $\dot{x}_r$ differenziert, woraufhin dieses Signal $\dot{x}_r$ mittels des zweiten Differenzierers 39 zu dem Signal $\ddot{x}_r$ nach der Zeit differenziert wird.

Der vierte Differenzierer 43 leitet das Signal x zu dem Signal $\dot{x}$ ab, das wiederum mittels des dritten Differenzierers 42 zu dem Signal $\ddot{x}$ abgeleitet wird. Der zweite Vergleicher 40 erzeugt das Signal $\dot{e}$ durch Subtrahieren des Signals $\dot{x}$ von dem Signal $\dot{x}$. Das Signal e wird von dem Multiplizierer 38 mit dem Wert $-\lambda_2$ multipliziert, das Signal e wird von dem ersten Multiplizierer 32 mit dem konstanten Wert $-\lambda_1$ multipliziert. Der Addierer 33 addiert das Ausgangssignal des ersten Multiplizierers 32, das des dritten Multiplizierers 38 und zieht von der sich daraus ergebenen Summe das Ausgangssignal des dritten Vergleichers 41 ab. Der Addierer 33 gibt das Signal s aus, das in dem Funktionsblock 34 entsprechend dem Funktionsblock 3 aus Figur 1 als Argument verwendet wird. Das Ausgangssignal des ersten Funktionsblocks 34 wird mit Hilfe des Multiplizierers 35 mit dem Wert -K multipliziert und das Ergebnis dieser Multiplikation als Spannung u zum Steuern des Antriebs 36 ausgegeben.

Bei der gezeigten Regelungsschaltung erfolgt die Regelung ohne die Annahme, dass die Ableitung sowie die zweite Ableitung des Signals $x_r$ Null sind.

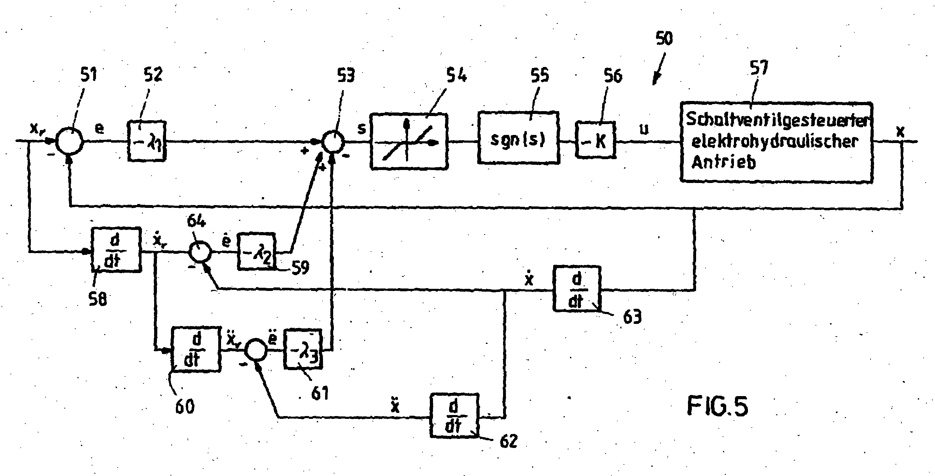

Figur 5 zeigt eine Vorrichtung mit einem hydraulischen Antrieb 57 und einer Regelungsschaltung für diesen hydraulischen Antrieb 57 in einer dritten Ausführungsform. Dabei enthält der hydraulische Antrieb 57 im Gegensatz zum Ausführungsbeispiel aus Figur 1 ein Schaltventil und kein Stetigventil.

Die Regelvorrichtung enthält einen ersten Vergleicher 51, der durch Subtraktion des Signals x von dem Signal $x_r$ das Differenzsignal e bildet, das in einem ersten Multiplizierer 52 mit dem Faktor $-\lambda_1$ multipliziert wird.

Das Signal $x_r$ wird in einem ersten Differenzierer 58 zu dem Signal $\dot{x}_r$ abgeleitet, das wiederum im zweiten Differenzierer 60 zu dem Signal $\ddot{x}_r$ abgeleitet wird. Ein vierter Differenzierer 63 leitet das Signal x zu dem Signal $\dot{x}$ ab, das wiederum zu dem Signal $\ddot{x}$ in einem dritten Differenzierer 62 abgeleitet wird. Ein zweiter Vergleicher 64 subtrahiert das Signal $\dot{x}$ von dem Signal $\dot{x}_r$, wodurch das Signal $\dot{e}$ gebildet ist, das im zweiten Multiplizierer 59 mit dem Signal $-\lambda_2$ multipliziert wird. Das Signal $\ddot{e}$ wird durch Abziehen des Signals $\ddot{x}$ von dem Signal, $\ddot{x}_r$ gebildet.

In einem dritten Multiplizierer 61 wird das Signal $\ddot{x}$ mit dem Wert $-\lambda_3$ multipliziert. Der Addierer 53 zieht das Ausgangssignal des dritten Multiplizierers 61 von der Summe der Ausgangssignale der Multiplizierer 52 und 59 ab. Das Ausgangssignal des Addierers 53 ist das Signal s, das als Eingangssignal für das Totzoneglied 54 verwendet wird. Das Ausgangssignal des Totzoneglieds 54 dient.als Argument des Funktionsblocks 55. Das Ausgangssignal des Funktionsblocks 55 wird in einem vierten Multiplizierer 56 mit dem Wert -K zu dem Signal u multipliziert. Das Signal u ist das Ansteuersignal für den hydraulischen Antrieb 57.

Die Herleitung der in Figur 5 gezeigten Regelungsschaltung ergibt sich folgendermaßen. Der Reglerentwurf basiert auf einem vereinfachten linearen Modell 3. Ordnung (n=3) für das elektrohydraulische Antriebssystem wie in Gleichung (1), die bezüglich Figur 1 beschrieben wurde.

Für n=3 und ergibt sich ebenso als Schaltfläche

$$s(\tilde{e},t) = \lambda_1\tilde{e} + \lambda_2\dot{\tilde{e}} + \lambda_3\ddot{\tilde{e}} \qquad (2)$$

mit $\tilde{e} = x - x_r$
und mit $e = x_r - x$ wird:

$$s(e,t) = -\lambda_1 e - \lambda_2\dot{e} - \lambda_3\ddot{e} \qquad (3)$$

Unter Verwendung des Lyapunov-Ansatzes

$$s(t) = -K * sgn(s) \qquad (4)$$

wird das System auf die Schaltfläche für den Sliding-Mode eingeführt (reaching law) sowie asymptotische Stabilität gewährleistet.
Das Stellgesetz ist wie folgend definiert:

$$u = -K \cdot sgn(s)$$

Dabei ist K gleich der maximalen Ventilspannung, z.B. 10 V. Das so genannte "chattering" wird durch Verwendung der Totzone vermieden.

Das in Figur 5 gezeigte Regelkonzept wurde in einer Simulation mit dem Stimulator MOSIHN implementiert. Die Simulationsergebnisse für eine beispielhaft gewählte Zylinder-/ Schaltventil-Kombination zeigen ein sehr gutes Regelungsverhalten bei Positioniervorgängen sowie bei der Trajektorienverfolgung. Insbesondere ergeben sich kürzere Einschwingzeiten und geringere Schleppabstände. Auch eine höhere Robustheit gegenüber Parameterschwankungen, wie Masse, Reibung etc., ist zu erkennen.

Zu erwähnen ist hierbei allerdings, dass bei dem Ausführungsbeispiel die Verwendung der sat-Funktion anstelle der signFunktion mit einem Verlust an Robustheit einhergehen würde.

Figur 6 veranschaulicht eine Schaltgerade s in der Phasenebene für das Ausführungsbeispiel nach Figur 5. Im Vergleich zu Figur 2 ist zu erkennen, dass die Kurve, die das Chattering kennzeichnet, Knickpunkte aufweist.

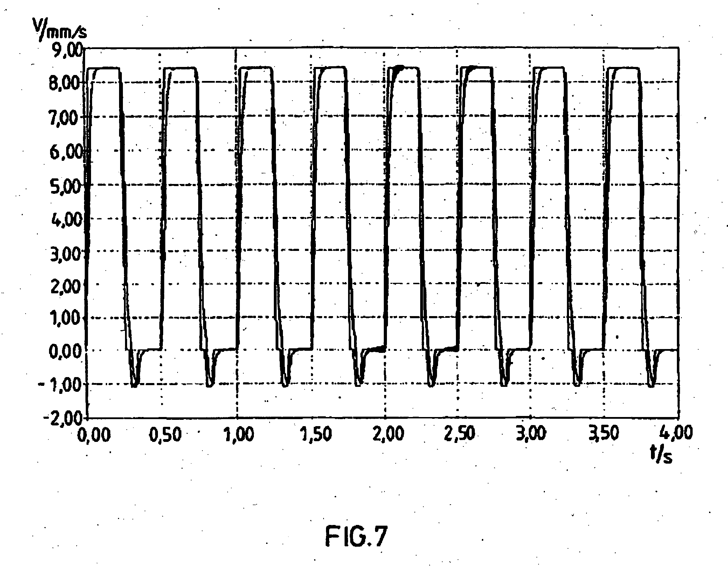

Figur 7 zeigt die Geschwindigkeitsregelung für einen Zugzylinder in einer Stranggießanlage mit einer erfindungsgemäßen Sliding-Mode Regelung. Als Zugzylinder des Antriebs 5 wird eine Gleichgangzylinder verwendet. Die angenommene Zugkraft ist 70kN. Aufgrund verschiedener Strangdurchmesser und Stranglängen ergeben sich unterschiedliche Massenverhältnisse von minimal 5400 kg bis maximal 31800 kg. Weiterhin ergeben sich unterschiedliche Steifigkeiten im Strang, so dass die Regelung zusätzlich schwierig wird. In Figur 7 ist die gewünschte Geschwindigkeit und die tatsächliche Geschwingkeit des Strang in Millimeter pro Sekunde über der Zeit in Sekunden aufgetragen. Der Strang hat einen Durchmesser von 120 mm und die minimale Mase von 5406 kg. Die gewünschte Geschwindigkeit wechselt regelmäßig zwischen 90 mm/s und -10 mm/s. Die tatsächliche Geschwindigkeit folgt dem Verlauf, im wiesentlichen gleichförmig.

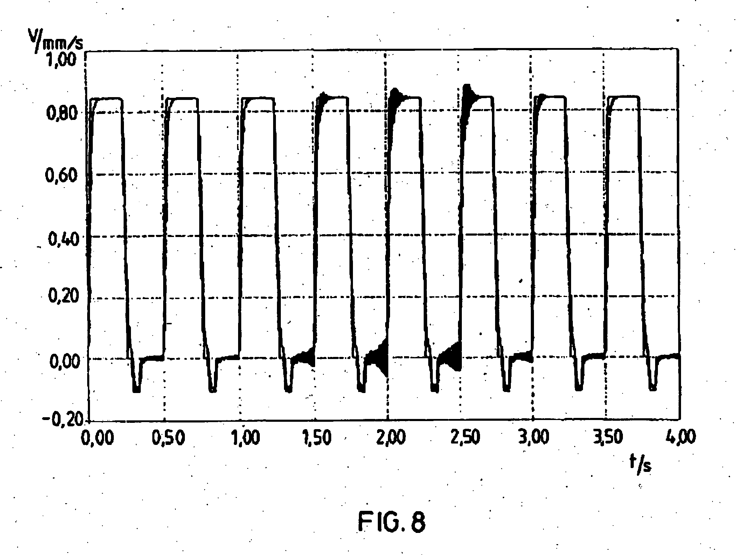

Figur 8 zeigt im Vergleich dazu die Geschwindigkeitsregelung für einen Zugzylinder mit einer herkömmlichen Regelung. Es wurde ein Regler mit einer P-Regelung, p-Punkt Rückführung und Sollwertaufschlagung erstellt, um gute Regeleigenschaften zu erhalten. Der Regler wurde mit der gleichen Last wie in Figur 7 betrieben. Es zeigt sich, dass Schwingungen auftreten, die in der Regelung nach Figur 7 nicht auftraten. Die simulationen wurde für verschiedene Strangdurchmesser und Massen durchgeführt. Es zeigte sich, dass die Sliding-Mode Regelung insbesonders bei großen Massen bessere Ergebnisse lieferte und damit wesentlich robuster ist.

Zur Ermittlung des Faktors F wird folgendes Verfahren vorgeschlagen.

Eine der bedeutendsten Phänomene ist das oben bereits erwähnte Klappern oder Rattern (engl. »chattering"). Im Rahmen des Entwurfs einer Sliding-Mode Regelung wird zunächst angenommen, dass das Stellglied, z.B. ein Regelventil, beliebig (unendlich) schnell betätigt werden kann. Dieses ist in der Realität allerdings prinzipiell nie der Fall. Ein Grund dafür ist, dass reale Stellglieder nicht unendlich schnell reagieren können.

Um das "Chattering" zu vermeiden wird das ideale Schaltglied sgn(s) durch eine symmetrische Begrenzung mit linearem Arbeitsbereich angenähert (6):

$$sat = \begin{cases} sgn(\frac{s}{\Phi}) & |s| > \Phi \\ \frac{s}{\Phi} & |s| \le \Phi \end{cases}$$

Dies bedeutet im Zustandsraum, dass eine Grenzschicht um die Schaltfläche herum eingeführt wird. Innerhalb dieser Grenzschicht wird das Regelgesetz durch eine kontinuierliche Approximation ersetzt. Die Konsequenz dieser Methode ist, dass die Robustheit des Systems teilweise verloren geht. Insbesondere ist die restliche Robustheit von der Dicke der Grenzschicht F abhängig. Das Regelgesetz mit der kontinuierlicher Approximation wird in der Literatur oft als "Quasi-SMC", "Pseudo-SMC" oder "Soft-SMC" bezeichnet.
Die gesamte Regelgesetz lautet (3.12):

$$u_{smc} = u_{eq} - k'^* sat(\frac{s}{\Phi})$$

Die Einstellung der Saturation-Funktion lässt sich in 4 Schritten realisieren:

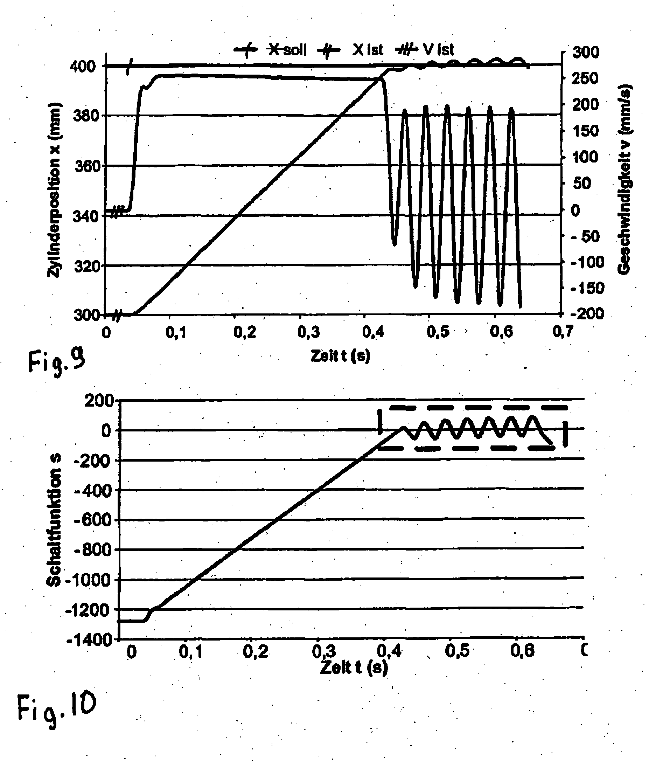

1) Untersuchung des Zylinderausfahrens mit der Signum-Funktion mit k'= 0,3-0,4 Umax . Das verwenden der Signumfunktion sgn wird als hartes Umschalten bezeichnet. Figur 9 zeigt das Verhalten des Zylinders. X bezeichnet dabei den Ort, während v die Geschwindigkeit anzeigt. Der Sollwert Xsoll ist bie 400 mm, während die Zylinderposition Xist am Anfang bie 300 mm ist. Mit Hilfe der Regelung wird die Zylinderposistion auf den Istwert geregelt. Es ist erkennbar, dass die Konvergenzphase zwischen 0,05 s und etwa 0,4 s stabil und schwingungsfrei ist. Ab der Zeit 0,4 s ist ein Klappern zu erkennen, wobei die Geschwindikeit zwischen +160 und +160 mm/s mit einer Frequenz von etwa 40 Hz variert.

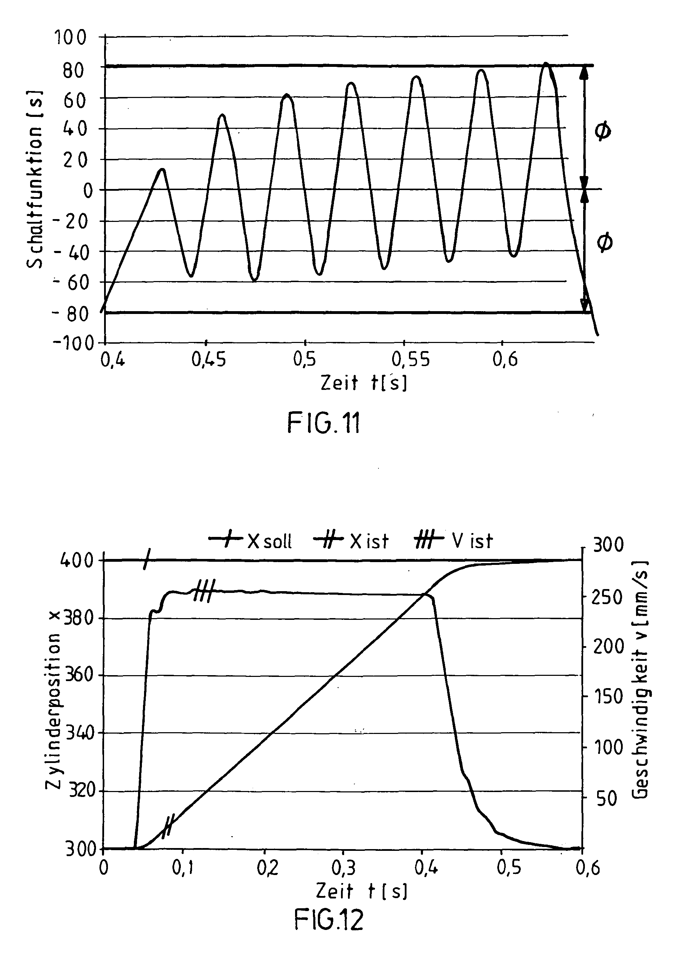

2) In einem zweiten Schritt wird die Schaltfunktion s gemessen. Die Schaltfunktion kann aus den Werten Xsoll und Xist gemäß den Formeln (3) und (4) ermittelt werden. Die Schaltfunktion ist in Figur 10 gezeigt. Figur 11 ist ein vergrößerter Ausschnitt aus Figur 11.
Mit Hilfe der Figur 11 wird die Grenzschichtdicke F gemessen, indem die und Bestimmung von F während der "ChatteringPhase", Die Grenzschichtdicke entspecht in etwa der halben Auslenkung zwischen Minumum und Maximum der Schaltfunktion während der Chattering-Phase, in diesem Fall wird F gleich 80 gesetzt.

3) In einem weiteren Schritt wird der Parameters F verändert und in die Saturationsfunktion eingesetzt.

4) Im vierten Schritt wird das Zylinderausfahren mit der Saturation-Funktion mit k' = 0.3 -0.4 $u_{max}$ geprobt. Das Verwenden der Saturationsfunktion wird als weiches Umschalten bezeichnet. Figur 12 zeigt das entsprechende Verhalten, gemäß dem kein Klappern mehr erkennbar ist.

Ein zu lange dauernder Chattering-Zustand kann zur Anregung der Systemresonanzfrequenzen führen, was besonders gefahrlich bei komplexeren Anlagen ist. Um Auswirkung zu minimieren und um die Einstellprozedur zu vereinfachen, wurde eine modifizierte Regelstruktur entwickelt und implementiert.

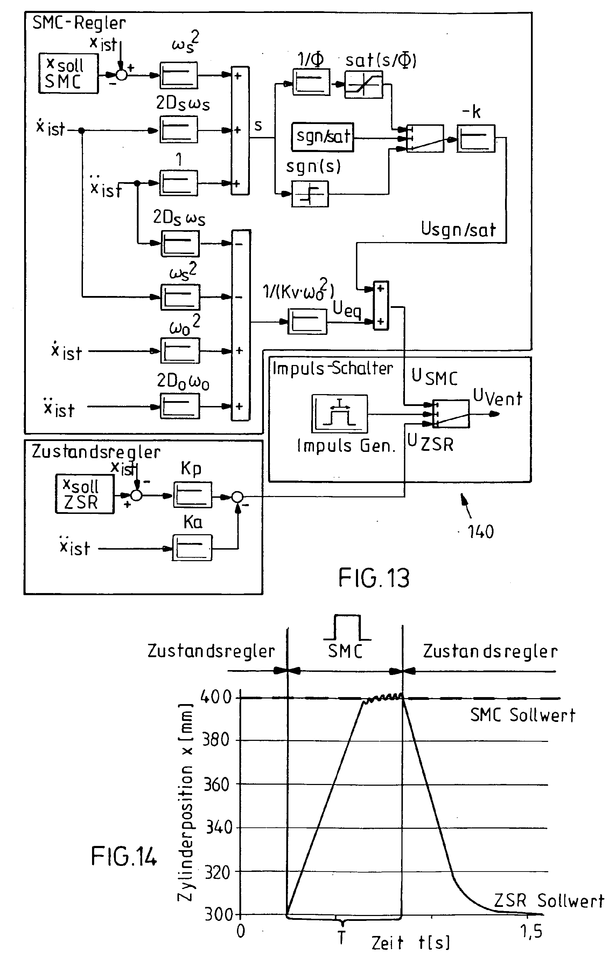

Figur 14 zeigt eine solche Regelstruktur, die nur während dem Einstellverfahren verwendet wird. Danach wird dann wieder der vollständige SMC-Regler verwendet. Figur 14 stellt nur eine Prinzipskizze dar, die tatsächliche Hardware-Implementierung kann je nach Steuergerät unterschiedlich ausfallen.
Die Teststruktur 140 besteht aus 3 Komponenten: einem SMCRegler, einem Zustandsregler und einem Impuls-Schalter. Die beiden Regeler werden in einem Festwertregelungs-Modus, bei denen $x_{SOLL-SMC}$ und $x_{SOLL-ZSR}$ jeweils konstant sind, betrieben. Der SCM-Regler empfängt die Werte Xist und Xsoll sowie die erste und zweite Ableitung von Xist.
Um den diskontinulierlichen Anteil zu berechnen, wird die Schaltfunktion gemäß Gleichung 4 ermittelt. Der diskontinuierliche Anteil kann vom Bediener auf hartes oder weiches Umschalten eingestellt werden (sgn/sat-Funktion). Der äquialente Anteil beträgt wird berechnet zu

$$u_{eq} = \frac{\dot{x}_{ist}(\omega_0^2 - \omega_s^2) + \ddot{x}_{ist}(2D_0\omega_0^2 - 2D_s\omega_s^2)}{K_{V_s} * \omega_0^2} .$$

Der diskontinulierliche Anteil und der aequivalente Anteil wird zu der Ausgangsspannung $U_{SMC}$ des SMC-Reglers addiert.
Der Zustandsregler gibt an seinem Ausgang eine, Spannung $U_{ZSR}$, die sich aus folgender Formel ergibt:

$$U_{ZSR} = Kp(x_{SollZSR} - x_{ist}) - Ka * \ddot{x}_{ist}$$

Der Impuls-Generator schaltet die Ausgangsspannung $U_{SMC}$ des SMC-Reglers oder die Ausgangsspannung $U_{ZSR}$ des Zustandsreglers auf seinen Ausgang. Wenn der Ausgang des Impuls-Generators null beträgt, verbindet der Impuls-Schalter den Ausgang $U_{Vent}$ Ventilspannung mit dem Zustandsregler und damit wird der Antrieb auf die Position $x_{SOLL-ZSR}$ geregelt.

Im Impulsgenerator wird ein Impuls mit definierter Breite T generiert, dieser Implus schaltet die Ventilspannung auf den SMC-Ausgang um. Innerhalb der Impulsdauer wird der Zylinder auf Position $x_{SOLL-SMC}$ geregelt, wobei am Ende des Impulses der SMC-Regler automatisch auf den Zustandsregelkreis zurückschaltet.

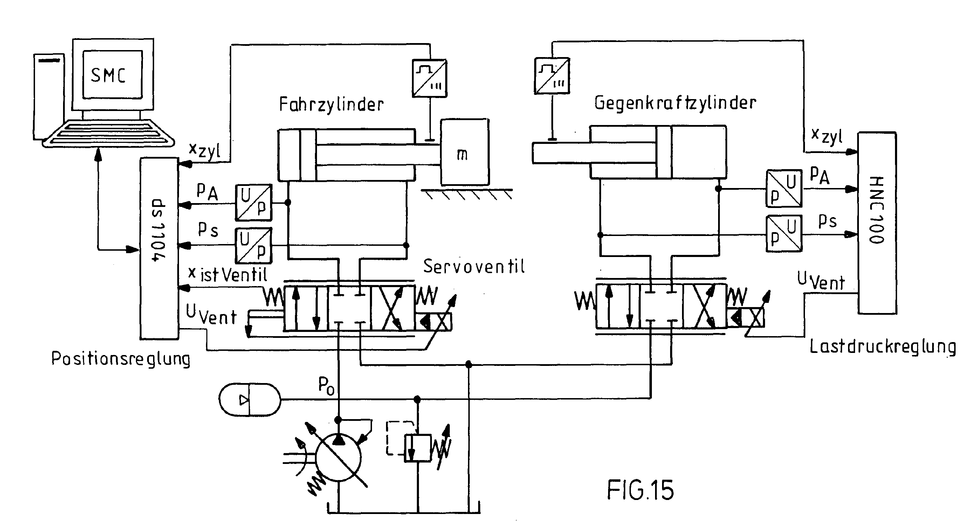

Figur 15 stellt die Zylinderposition und den Umschaltvorgang der Regelkreise dar. Die Einstellung der entsprechenden Impulsbreite ermöglicht die genaue Untersuchung der Konvergenzund Chattering-Phase, wohingegen die Chattering-Phase weniger auf das Umschalten des Ventils beschränkt ist. Mit dieser Methode wurde die Gefahr der Resonanz eliminiert.

Der Parameter F sollte zuerst als $F = F_{max}$ eingestellt werden und je nach Verhalten kann dieser dann eventuell reduziert werden. Es ist für die Robustheit und Genauigkeit günstiger, den minimalsten Wert von F einzustellen, bei dem noch eine chatteringfreie Bewegung stattfindet. Dafür kann F stufenweise abgesenkt werden (z.B. 10% - Schritten), bis das Chattering in Erscheinung tritt.

Das Experiment kann auch für andere Werte von k' wiederholt werden (z.B. k'=10%, 20%...60% $u_{max}$), um das optimale dynamische Verhalten zu erzeugen. Allgemein gilt: je kleiner k' ist, desto kleiner sind die Chattering-Amplituden. Damit kann $F_{max}$ gewählt werden, um besseres dynamisches Verhalten zu erhalten. Das ausgewählte k' muss aber groß genug sein um Stabilität zu garantieren.

De Funktionsfähigkeit des entwickelten Regelungskonzeptes wurde im Systemversuch überprüft und getestet.

Die Anlage besteht aus einem ventilgesteuerten Differentialzylinder mit den Werten Kolbendurchmesser = 63 mm, Kolbenstange = 40 mm und Hub = 1200mm. Die bewegte Masse lässt sich von 650 bis 1650kg verändern. Zur Erfassung der Fahrzylinderposition wurde ein inkrementeller Wegaufnehmer mit einer Auflösung von 1 $\mu$m eingesetzt. Der Zylinder wird über ein zweistufiges Servoventil vom Typ 4WSE2ED10-55/45 mit einem Nennvolumenstrom von $O_{Nenn}$= 451/min bei einer Druckdifferenz $\Delta p_N$ = 70 bar gesteuert.

Die Ventileigenfrequenz beträgt für 20% Signalamplitude ca. 160Hz bei 140bar Betriebsdruck und maximaler Stellgeschwindigkeit Vmax = 10 %/ms. Die gesamte Steuerung, Aufnahme und Verarbeitung von Messdaten wurde mittels einer dSpace-Karte 1104 realisiert, wobei der in Matlab/Simulink implementierte Regler eine Abtastzeit von T= 1 ms aufwies. Die Gegenkraft (als Störgröße) wurde durch einen lastdruckgeregelten Gegenkraftzylinder vorgegeben. Der Gegenkraftzylinder wurde unabhängig vom Fahrzylinder mit einer HNC100-Karte geregelt.

Der Sliding-Mode Regler eignet sich insbesondere für Aufgaben, bei denen einem bestimmten Sollwertprofil, das Sollposition, Sollgeschwindigkeit und Sollbeschleunigung enthält, gefolgt werden muss. Zum Beispiel werden Kunststoffspritzgießmaschinen oder Werkzeugmaschinen über definierte Profile verfahren.

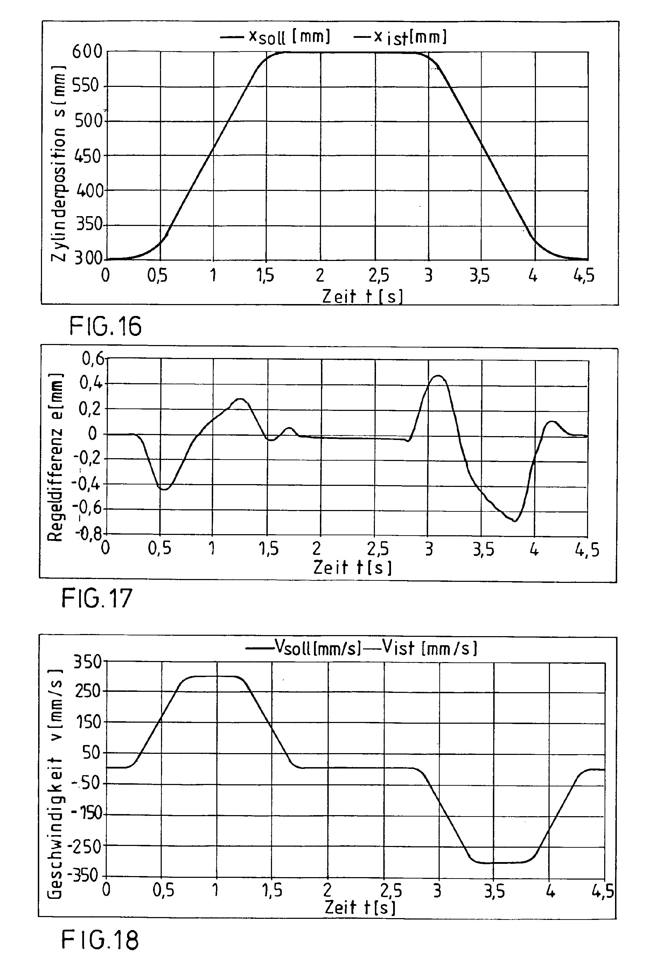

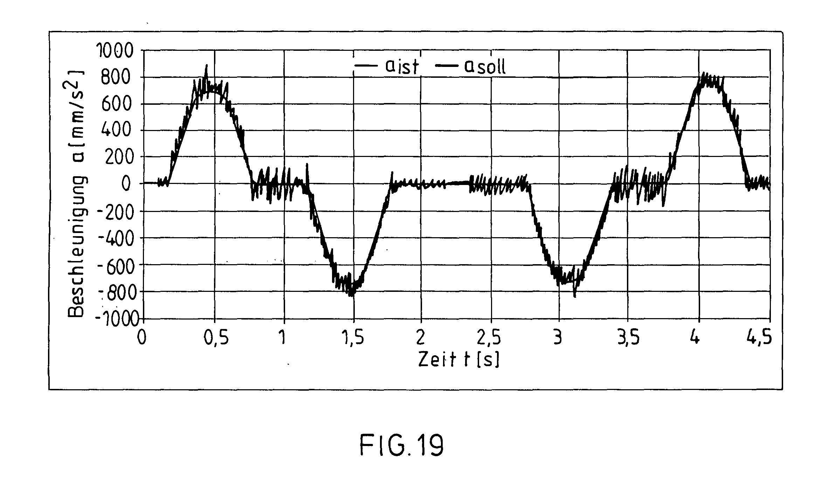

Figuren 16 bis 19 zeigen die Untersuchungsergebnisse für eine Schlittenmasse von m = 650kg (Nominallastfall) und einer ruckfreien Rampe mit einer mittlerer Beschleunigung am= 500 mm/s$^2$ , maximale Geschwindigkeit $v_{max}$= 300 mm/s, und Hub x = 300 mm. Die bleibende Regelabweichung e$^-$ beträgt 30 $\mu$m für x= 600mm und 10 $\mu$m für x = 300 mm. Der Schleppfehler bewegt sich zwischen e = -0,7 mm und 0,5 mm. Die durchgeführten Messungen zeigen wie erwartet ein stabiles, "chatteringfreies" Verhalten. Der Nachlauf der vorgegebenen Trajektorie ist sehr gut im gesamten Hub.

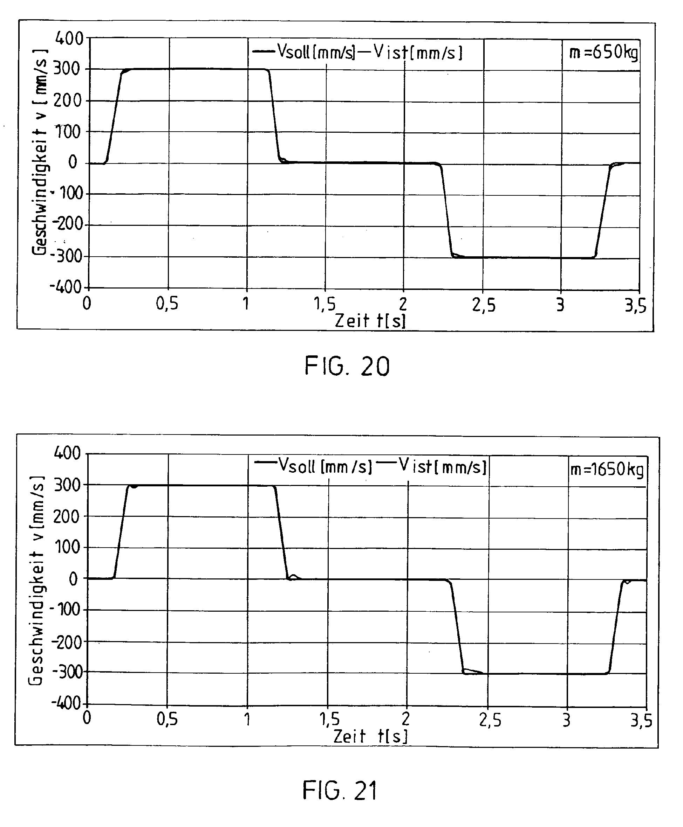

Figur 17 zeigt die Soll- und Ist-Position, Figur 18 zeigt die Positionierungsgenauigkeit, Figur 18 die Soll- und Ist-Geschwindigkeit und Figur 20 die Soll- und Ist-Beschleunigung der Zylinderposition.

Figuren 21 und 22 stellen den Geschwindigkeitsverlauf für die Schlittenmassen 650 kg und 1650 kg dar. Der Regler wurde für die niedrigste Masse eingestellt. Während des Tests waren die Reglerparameter unverändert. Es erfolgte auch keine Online-Identifikation der Strecke oder eine Adaption/Anpassung des Reglers. Für den Test wurde die Rampe mit mittlerer Beschleunigung $a_m$= 3000 mm/s$^2$ gefahren.

Zu erkennen ist, dass die Masseänderung um der Faktor i= 2,5 praktisch keinen Einfluss auf die dynamischen Leistungsfähigkeit der Sliding-Mode Regelung hat. Der Nachlauf der Trajektorie ist stabil und gut gedämpft.

Bezugszeichenliste

1     Vorrichtung
2     erster Multiplizierer
3     erster Funktionsblock
4     zweiter Multiplizierer
5     hydraulischer Antrieb
6     dritter Multiplizierer

| 7 | erster Differenzierer |
|---|---|
| 8 | zweiter Differenzierer |
| 10 | erster Vergleicher |
| 11 | Additionsglied |
| 14 | Differenzialzylinder |
| 16 | Sensorelektronik |
| 17 | Regelventil |
| 18 | Elektronik |
| 19 | Kolben |
| 20 | Kolbenstange |
| 21 | Druckraum |
| 22 | Druckraum |
| 23 | Messrohr |
| 24 | Weggeber |
| 31 | erster Vergleicher |
| 32 | erster Multiplizierer |
| 33 | Additionsglied |
| 34 | Funktionsblock |
| 35 | zweiter Multiplizierer |
| 36 | hydraulischer Antrieb |
| 37 | erster Differenzierer |
| 38 | dritter Multiplizierer |
| 39 | zweiter Differenzierer |
| 40 | zweiter Vergleicher |
| 41 | dritter Vergleicher |
| 42 | vierter Differenzierer |
| 43 | dritter Differenzierer |
| 44 | Tank |
| 45 | Pumpe |
| 51 | erster Vergleicher |
| 52 | erster Multiplizierer |
| 53 | Additionsglied |
| 54 | Totzoneglied |
| 55 | Funktionsblock |
| 56 | zweiter Multiplizierer |
| 57 | hydraulischer Antrieb |
| 58 | erster Differenzierer |
| 59 | dritter Multiplizierer |
| 60 | zweiter Differenzierer |
| 61 | vierter Multiplizierer |
| 62 | vierter Differenzierer |
| 63 | dritter Differenzierer |
| 64 | zweiter Vergleicher |

**Patentansprüche**

1. Verfahren zum Regeln eines hydraulischen Antriebs (5),
wobei der Antrieb (5) einen Zylinder (14) und ein den Zylinder schaltendes Ventil (17) aufweist, wobei eine elektrische Spannung (u(t)) von dem Ventil (17) empfangen und in eine Position (x) des Zylinders (14) umgesetzt wird, wobei die Position (x) durch Ansteuern der elektrischen Spannung (u(t)) mit einer Slidirig-Mode Regelung geregelt wird, und das Stellgesetz der Regelung ein äquivalentes Stellgesetz (ueq) und ein diskontinuierliches Stellgesetz ($u_{sw}$) enthält, wobei und das diskontinuierliche Stellgesetz ($u_{sw}$) mit folgenden Schritten erzeugt wird:

- Berechnen einer Schaltfunktion s(e,t) als gewichtete Summe $S(e;t)=-\lambda_1 e-\lambda_2 \dot{e}-\lambda_3 \ddot{e}$, wobei gilt: $e=x_r -x$ und $x_r$ die Zielposition des Zylinders anzeigt, und $\lambda_1$, $\lambda_2$, $\lambda_3$ Konstanten sind, für die gilt: $\lambda_1$, $\lambda_2$, $\lambda_3 > 0$;
- Bilden einer Vorzeichenfunktion (sgn), wobei das Argument der Vorzeichenfunktion die Schaltfunktion s(e,t) enthält.

**2.** Verfahren nach Anspruch 1,
**dadurch gekennzeichnet, dass** das äquivalente Stellgesetz (ueq) gleich Null gesetzt wird.

**3.** Verfahren nach Anspruch 1 oder 2,
**dadurch gekennzeichnet, dass** die Schaltfunktion als gewichtete Summe $s(e,t)=\lambda_1 e+\lambda_2 \dot{x}+\ddot{x}$ berechnet wird.

**4.** Verfahren nach Anspruch 1, 2 oder 3,
**dadurch gekennzeichnet, dass**
das Ventil (14) des hydraulischen Antrieb als Stetigventil ausgebildet ist, das von der Spannung u(t) angesteuert wird, die mittels des Stellgesetzes $u=u_{sw}=u_{eq}-K*sat(\frac{s}{\Phi})$ berechnet wird,

wobei K und F Konstanten >0 sind und

$$sat\left(\frac{s}{\Phi}\right)=\begin{cases} sgn(\frac{s}{\Phi}) & |s|>\Phi \\ \frac{s}{\Phi} & |s|\leq\Phi \end{cases}$$

wobei sgn die Vorzeichenfunktion ist.

**5.** Verfahren nach Anspruch 4,
**dadurch gekennzeichnet, dass** F mit Hilfe folgender Schritte ermittelt wird:

- Ansteuern des Position des zylinders durch Anlegen der Spannung u gemäß der Funktion $u(t)=u_{sw}=u_{aq}-K$*sgn (*s*),
- Messen der Position, der Geschwindigkeit und der Beschleunigung des Zylinders und daraus Ermitteln von sm(e,t) gemäß

$$s_m(e,t)=-\lambda_1 e-\lambda_2 \dot{e}-\lambda_3 \ddot{e}$$

- falls sm ein Chattering-Verhalten aufweist, Messen der Auslenkung des Chattering von sm und Setzen von F gleich der halben Auslenkung zwischen Minium und Maximum von sm während des Chattering.

**6.** Verfahren nach Anspruch 5,
**gekennzeichnet durch** einen weiteren Schritt des Testens des gesetzten Parameters F **durch** Ansteuern des Zylinders mittels des Stellgesetzes zu $u=u_{sw}=u_{eq}-K*sat(\frac{s}{\Phi})$ ,

$$sat\left(\frac{s}{\Phi}\right)=\begin{cases} sgn(\frac{s}{\Phi}) & |s|>\Phi \\ \frac{s}{\Phi} & |s|\leq\Phi \end{cases}$$

**7.** Verfahren nach Anspruch 5, **gekennzeichnet durch** einen anschließenden Schritt es Modifizieren des Parameters F, falls beim Schritt des Testens ein Chattering-Verhalten festgestellt wurde.

**8.** Verfahren nach Anspruch 1, 2 oder 3,
**dadurch gekennzeichnet, dass** das Ventil des hydraulischen Antriebs als Schaltventil ausgebildet ist, das von der Spannung u(t) angesteuert wird, die mittels des diskontiuierlichen Stellgesetzes $u(t)=u_{sw}=-K$*sgn(*s*) berechnet wird,
wobei K eine Konstante > 0 ist und sgn die Vorzeichenfunktion ist.

9. Verfahren nach einem der Ansprüche 1 bis 8,
**dadurch gekennzeichnet, dass** K gleich der maximalen Ventilspannung ist.

10. Verfahren nach einem der Ansprüche 1 bis 9,
**dadurch gekennzeichnet, dass** und $\lambda_2=2\xi\,\omega_0$ gilt,
wobei $\omega_0$ gleich der Eigenfrequenz[1] des Zylinders und $\xi$ gleich dem gewünschten Zylinderdämpfungsgrad sind.

11. Regelvorrichtung zum Regeln eines hydraulischen Antriebs (5), wobei der Antrieb (5) einen Zylinder (14) und ein den Zylinder schaltendes Ventil (17) aufweist, wobei eine elektrische Spannung (u(t)) von dem Ventil (17) empfangen und in eine Position (x) des Zylinders (14) gesetzt wird,
wobei eine Regelschaltung (1) vorgesehen ist zum Regeln der Position (x) durch Ansteuern der elektrischen Spannung (u(t)) mit einer Sliding-Mode Regelung, wobei das Stellgesetz der Regelung ein äquivalentes Stellgesetz (ueq) und ein diskontinuierliches Stellgesetz (u$_{sw}$) enthält, bei dem das diskontinuierliche Stellgesetz (u$_{sw}$) durch folgendes erzeugt wird:

- einen Addierer (11, 33, 53) zum Berechnen und Ausgeben einer Schaltfunktion s(e,t) als gewichtete Summe $s(e,t)=-\lambda_1 e-\lambda_2\dot{e}-\lambda_3\ddot{e}$, wobei für e gilt: $e=x_r-x$ und $x_r$ die Zielposition des Zylinders anzeigt, und $\lambda_1, \lambda_2, \lambda_3$ Konstanten sind, für die gilt: $\lambda_1, \lambda_2, \lambda_3 > 0$;
- einen Funktionsblock (3, 34, 55) zum Bilden einer Vorzeichenfunktion (sgn), wobei der Funktionsblock (3) einen Eingang zum Empfang des Arguments der Vorzeichenfunktion enthält und der Eingang mit einem Ausgang des Addierers (11) gekoppelt ist.

12. Regelvorrichtung nach Anspruch 11, **dadurch gekennzeichnet, dass** das äquivalente Stellgesetz (ueq) gleich Null gesetzt wird.

13. Regelvorrichtung nach Anspruch 11 oder 12,
**gekennzeichnet durch** ein Totzoneglied (54) zwischen dem Ausgang des Addierers(53) und dem Eingang des Funktionblocks (55).

14. Regelvorrichtung nach Anspruch 11 bis 13,
**dadurch gekennzeichnet, dass**
das Ventil (14) des hydraulischen Antriebs als Stetigventil ausgeblidet ist, das von der Spannung u(t) angesteuert wird, die mittels des diskontiuierlichen stellgesetzes $u \doteq u_{sw} = -K * sat(\frac{s}{\Phi})$ berechnet wird,
wobei K und F Konstanten >0 sind und

$$sat\left(\frac{s}{\Phi}\right)=\begin{cases} \mathrm{sgn}(\frac{s}{\Phi}) & |s| > \Phi \\ \dfrac{s}{\Phi} & |s| \leq \Phi \end{cases}$$

gilt, wobei sgn die Vorzeichenfunktion ist.

15. Regelvorrichtung nach einem der Ansprüche 11 bis 14,
**dadurch gekennzeichnet, dass** das Ventil des hydraulischen Antrieb als Schaltventil ausgebildet ist, das von der Spannung u(t) angesteuert wird, die mittels des diskontiuierlichen Stellgesetzes $u(t)=u_{sw}=-K*\mathrm{sgn}(s)$ berechnet wird, wobei K eine Konstante > 0 ist und sgn die Vorzeichenfunktion ist.

16. Baugruppe aus einer Regelvorrichtung nach einem der Ansprüche 11 bis 15 und des von der Regelvorrichtung gelregelten hydraulischen Antriebs (5).

**17.** Stranggießanlage mit einer Baugruppe nach Anspruch 16.

FIG.1

EP 2 169 482 A2

FIG. 2

17

EP 2 169 482 A2

FIG.3

FIG.6

FIG.4

EP 2 169 482 A2

FIG.5

FIG.7

FIG. 8

Fig. 9

Fig. 10

FIG.11

FIG.12

FIG.13

FIG.14

FIG.15

EP 2 169 482 A2

FIG.16

FIG.17

FIG.18

FIG.19

FIG. 20

FIG. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7231265 B2